# EUROPÄISCHE PATENTANMELDUNG

(11) **EP 4 651 342 A1**
(43) Veröffentlichungstag der Anmeldung: **19.11.2025**
(21) Anmeldenummer: 24175734.3
(22) Anmeldetag: 14.05.2024
(51) Int. Cl.: H02K 1/02, H02K 1/276, H01F 1/03, H01F 7/02

(54) **MAGNETSEGMENTE FÜR EINEN ROTOR**

(71) Anmelder: Hilti Aktiengesellschaft, 9494 Schaan (LI)
(72) Erfinder: Asmus, Torsten, 87600 Kaufbeuren (DE); Steentjes, Simon, 86807 Buchloe (DE); Hurka, Florian, 86459 Margertshausen (DE); Deisling, Markus, 86836 Untermeitingen (DE); Ruff, Christian, 86391 Stadtbergen (DE); Gerold, Johannes, 82418 Murnau (DE); Rehorik, Kilian, 97082 Würzburg (DE); Dotz, Boris, 86937 Scheuring (DE)
(74) Vertreter: Hilti Aktiengesellschaft Corporate Intellectual Property

(57) **Zusammenfassung**

Rotor für einen Elektromotor, insbesondere als Antrieb für eine Werkzeugmaschine, wobei ein Rotorkörper vorgesehen mit wenigstens einem ersten und zweiten um eine Rotationsachse angeordneten Permanentmagnet, wobei das Material jedes Permanentmagneten in einem ersten und zweiten Randbereich eine um 5 bis 15%, vorzugsweise 7 bis 12%, höhere Koerzitivfeldstärke aufweist als das Material jedes Permanentmagneten in den verbleibenden Bereichen außerhalb des ersten und zweiten Randbereichs.

## Beschreibung

Die vorliegende Erfindung betrifft ein Rotor für einen Elektromotor, insbesondere als Antrieb für eine Werkzeugmaschine.

Des Weiteren betrifft die vorliegende Erfindung einen Elektromotor mit einem Rotor.

Darüber hinaus betrifft die vorliegende Erfindung eine Werkzeugmaschine mit einem Rotor.

Aus dem Stand der Technik sind Elektromotoren (insbesondere als Antrieb für Werkzeugmaschinen) bekannt, die zum Erzeugen eines Drehmoments im Wesentlichen einen Stator und einen relativ zu dem Stator drehbaren Rotor enthalten.

Rotoren als Komponenten bzw. Bauteile von Elektromotoren für Elektrowerkzeuge weisen zur Bildung von Magnetpolen üblicherweise Permanentmagnete auf.

Das Magnetfeld der Permanentmagnete interagiert mit dem Magnetfeld des Stators, welches durch mindestens einen Elektromagneten gebildet wird derart, dass ein Drehmoment in einer gewünschten Drehrichtung oder entgegengesetzt einer bestehenden Drehrichtung entsteht. Bedingt durch die Zahnabschnitte des Stators, welche bei Drehung des Rotors zyklische Änderungen der magnetischen Widerstände im magnetischen Kreis hervorrufen sowie zyklische Magnetfelder des Stators, welche mit dem Magnetfeld des Rotors in Wechselwirkung treten, sind die resultierenden magnetischen Feldvektoren im Permanentmagneten sowohl in Richtung als auch Betrag örtlich nicht konstant. Als Folge daraus treten Wirbelströme im Permanentmagneten auf, die neben Wirkungsgradverlusten eine zusätzliche Erwärmung im Rotor erzeugen. Die Erwärmung im Rotor kann zu hohen Betriebstemperaturen der Permanentmagnete führen, wodurch zumindest eine partielle irreversible Entmagnetisierung der Permanentmagnete hervorgerufen wird.

Es ist damit Aufgabe der vorliegenden Erfindung das vorstehend beschriebene Problem zu lösen.

Die Aufgabe wird gelöst durch den Gegenstand des unabhängigen Patentanspruchs 1, 5 und 6. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Rotor für einen Elektromotor, insbesondere als Antrieb für eine Werkzeugmaschine.

Erfindungsgemäß ist ein Rotorkörper vorgesehen mit wenigstens einem ersten und zweiten um eine Rotationsachse angeordneten Permanentmagnet, wobei das Material jedes Permanentmagneten in einem ersten und zweiten Randbereich eine um 5 bis 15%, vorzugsweise 7 bis 12%, höhere Koerzitivfeldstärke aufweist als das Material jedes Permanentmagneten in den verbleibenden Bereichen außerhalb des ersten und zweiten Randbereichs.

Das erste und dritte Randbereich kann auch als außenliegender Bereich oder Außenbereich bezeichnet werden.

Die Koerzitivfeldstärke kann auch als mittlere Koerzitivfeldstärke bezeichnet werden.

Entsprechend einer vorteilhaften Ausführungsform kann es möglich sein, dass das Material jedes Permanentmagneten in den Bereichen außerhalb des ersten und zweiten Randbereichs eine um mindestens 5 bis 10%, vorzugsweise 7%, höhere Remanenzflussdichte aufweist als das Material jedes Permanentmagneten in dem ersten und zweiten Randbereich.

Gemäß einer weiteren vorteilhaften Ausführungsform kann es möglich sein, dass das Volumen des ersten und zweiten Randbereichs zwischen 3 und 30%, vorzugsweise zwischen 5 und 25%, des Gesamtvolumens eines Permanentmagneten beträgt.

Entsprechend einer weiteren vorteilhaften Ausführungsform kann es möglich sein, dass sowohl der erste als auch zweite Randbereich distal (in maximaler Erstreckung) zu einem Mittelpunkt des Rotorkörpers sowie zu einem Mittelpunkt eines Permanentmagnet angeordnet sind.

Distal bedeutet in diesem Zusammenhang, dass sich sowohl der erste als auch zweite Randbereich in einer maximalen Erstreckung bzw. mit einer maximal möglichen Entfernung zu einem Mittelpunkt des Rotorkörpers sowie zu einem Mittelpunkt eines Permanentmagnet angeordnet sind.

Der erste und zweite Randbereich sind an gegenüberliegenden Enden des Permanentmagnet positioniert.

Des Weiteren wird die Aufgabe gelöst durch einen Elektromotor mit einem Rotor.

Darüber hinaus wird die Aufgabe gelöst durch eine Werkzeugmaschine mit einem Rotor.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine erfindungsgemäße Werkzeugmaschine gemäß einer beispielhaften Ausführungsform mit einem Elektromotor;
- Figur 2: eine Vorderansicht auf einen Stator und einen Rotor;
- Figur 3: eine perspektivische Ansicht auf den Rotorkörper gemäß einer ersten Ausführungsform;
- Figur 4: eine Vorderansicht auf den Rotorkörper mit einer Anzahl an Permanentmagneten gemäß einer ersten Ausführungsform;
- Figur 5: eine Vorderansicht auf einen Permanentmagneten gemäß der ersten Ausführungsform;
- Figur 6: eine perspektivische Ansicht auf einen Permanentmagneten gemäß der ersten Ausführungsform;
- Figur 7: eine Vorderansicht auf den Rotorkörper mit einer Anzahl an Permanentmagneten gemäß einer zweiten Ausführungsform;
- Figur 8: eine Vorderansicht auf einen Permanentmagneten gemäß der zweiten Ausführungsform;
- Figur 9: eine perspektivische Ansicht auf einen Permanentmagneten gemäß der zweiten Ausführungsform;
- Figur 10: eine Vorderansicht auf den Rotorkörper mit einer Anzahl an Permanentmagneten gemäß einer dritten Ausführungsform;
- Figur 11: eine Vorderansicht auf einen Permanentmagneten gemäß der dritten Ausführungsform; und
- Figur 12: eine perspektivische Ansicht auf einen Permanentmagneten gemäß der dritten Ausführungsform.

### Ausführungsbeispiele:

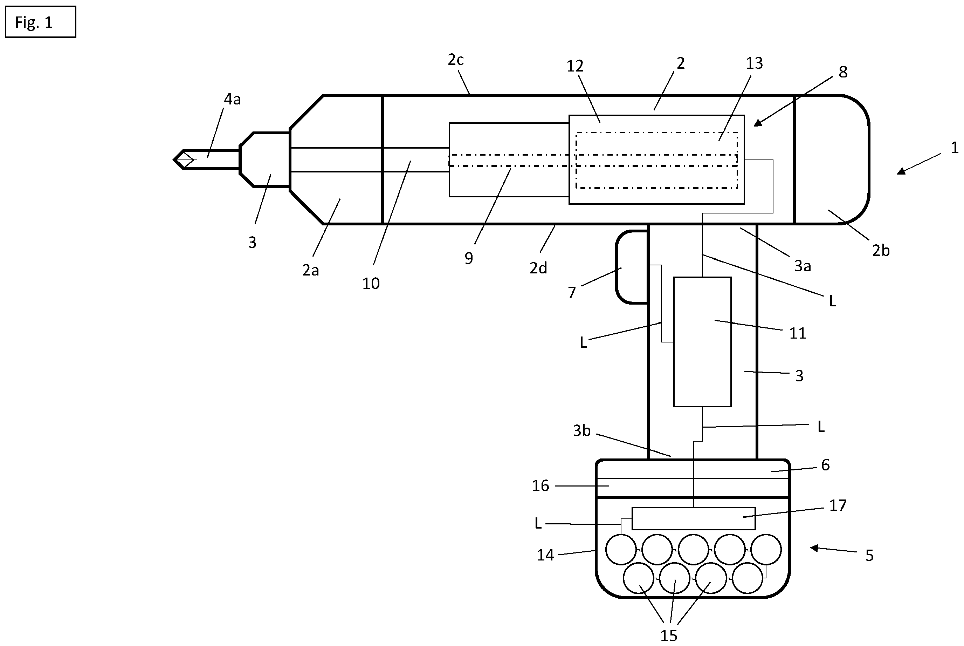

Figur 1 zeigt eine Werkzeugmaschine 1 gemäß einer beispielhaften Ausführungsform. Die Werkzeugmaschine 1 ist dabei in Form eines Akkuschraubers ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Akkuschrauber ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs 4a. In den Figuren ist das Werkzeug 4a als Schrauberbit dargestellt.

An dem unteren Ende 2d des Gehäuses 2 ist ein erstes Ende 3a des Handgriffs 3 positioniert. An dem zweiten Ende 3b des Handgriffs 3 ist eine Schnittstelle 6 vorgesehen.

Wie in Figur 1 gezeigt weist der Handgriff 3 einen Aktivierungsschalter 7 auf, mit dem die Werkzeugmaschine 1 in einen Aktivierungszustand oder Deaktivierungszustand eingestellt werden kann.

An die Schnittstelle 6 kann die Energieversorgung 5 wiederlösbar befestigt werden. In dem vorliegenden Ausführungsbeispiel ist die Energieversorgung 5 in Form eines Akkumulators ausgestaltete. Die Energieversorgung 5 dient zum Versorgen der Werkzeugmaschine 1 mit elektrischer Energie.

Entsprechend einem alternativen Ausführungsbeispiel kann die Energieversorgung 5 auch als Stromkabel zum Verbinden der Werkzeugmaschine 1 mit einer Netzstromquelle (Steckdose) ausgestaltet sein. Eine als Stromkabel ausgestaltete Energieversorgung 5 ist in den Figuren nicht dargestellt.

Im Inneren des Gehäuses 2 ist im Wesentlichen ein Elektromotor 8 als Antrieb, eine Getriebevorrichtung 9, eine Antriebswelle 10 und eine Steuereinrichtung 11 positioniert.

Der Elektromotor 8, die Getriebevorrichtung 9, die Antriebswelle 10 und die Werkzeugaufnahme 4 sind so im Inneren des Gehäuses 2 zueinander angeordnet, dass ein in dem Elektromotor 8 erzeugtes Drehmoment auf die Getriebevorrichtung 9, die Antriebswelle 10 und schließlich auf die Werkzeugaufnahme 4 bzw. auf das Werkzeug 4a übertragen werden kann.

Die Steuereinrichtung 11 ist mittels entsprechenden Leitungen L mit dem Aktivierungsschalter 7, der Akku-Schnittstelle 6 und dem Elektromotor 8 verbunden.

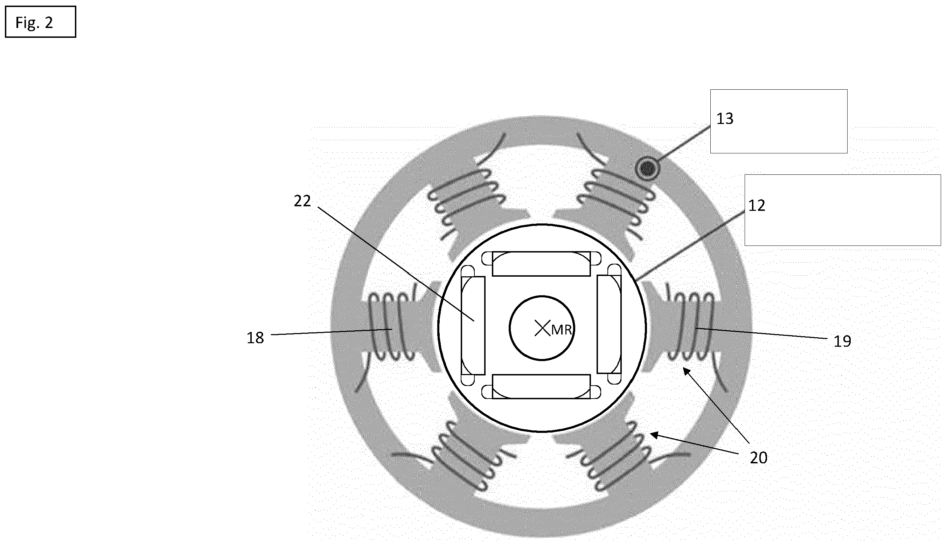

Der Elektromotor 8 ist in Form eines bürstenlosen Elektromotors ausgestaltet und enthält im Wesentlichen einen Rotor 12 und einen Stator 13, vgl. Figur 1 und 2.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 14, eine Anzahl an Energiespeicherzellen 15, eine Akku-Schnittstelle 16 sowie eine Steuerungseinrichtung 17.

Die Energiespeicherzellen 15 können auch als Akku-Zellen bezeichnet werden und sind im Inneren des Akku-Gehäuses 14 angeordnet.

Die Akku-Schnittstelle 16 dient zum elektrischen bzw. elektronischen sowie mechanischen Verbinden des Akkumulators 5 mit der Schnittstelle 6 der Werkzeugmaschine 1.

Zum elektrischen bzw. elektronischen Verbinden weist die Akku-Schnittstelle 16 einen Pluskontakt, einen Minuskontakt und einen Kommunikationskontakt auf. Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 15 dienen zum Aufnehmen, Speichern und erneuten Abgeben elektrischer Energie. Die Energiespeicherzellen 15 sind in zylindrischer Form sowie auf Basis einer Lithium-lonen-Technologie ausgestaltet. Jede Energiespeicherzelle 15 enthält an einem Ende eine Kontakteinrichtung, die zur Übertragung elektrischer Energie dient. Die einzelnen Kontakteinrichtung sind über entsprechende Leitungen L mit der Steuerungseinrichtung 17 des Akkumulators 5 verbunden.

Alternativ können die Energiespeicherzellen 15 auch auf einer anderen geeigneten Technologie basieren.

Die zylindrische Form der Energiespeicherzellen 15 ist ebenfalls optional, sodass auch jede andere geeignete Form bzw. Geometrie gewählt werden kann. So ist es insbesondere auch möglich, dass die Energiespeicherzellen 15 als Pouchzellen ausgestaltet sind.

Es ist zudem auch möglich, dass der Akkumulator 5 sowohl zylindrische Energiespeicherzellen 15 als auch Pouch-Zellen enthält. Es ist insbesondere möglich, dass der Akkumulator 5 lediglich eine einzige zylindrische Energiespeicherzelle 15 und eine einzige Pouchzelle enthält.

Die Steuerungseinrichtung 17 regelt und steuert verschiedene Funktionen des Akkumulators 5. Zu den Funktion gehört unter anderen die Steuerung der Aufnahme und Abgabe von elektrischer Energie in bzw. aus den Energiespeicherzellen 15. Darüber hinaus wird mit Hilfe der Steuerungseinrichtung 17 die Menge an elektrischer Energie gesteuert, die von den Energiespeicherzellen 15 aufgenommen oder abgegeben werden sollen.

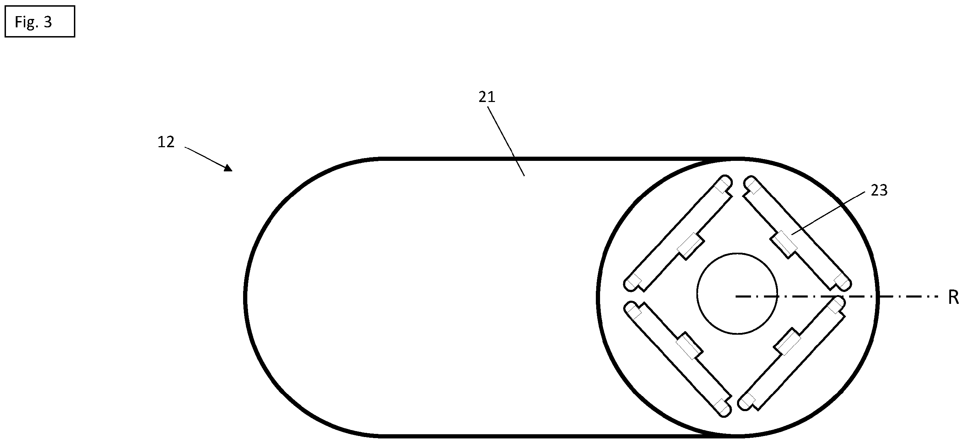

Wie in Figur 3 angedeutet ist der Rotor 12 im Inneren des Stators 13 positioniert und zudem drehbar zu dem Stator 13 ausgestaltet.

Wie in Figur 2 gezeigt enthält der Stator 13 ein Statorblechpaket mit sechs radial nach innen gerichtete Polzähne 18. Das Statorblechpaket besteht im Wesentlichen aus einer Anzahl an übereinander gestapelten Profilblechen.

Es sind jeweils zwei Polzähne 18 einander gegenüber positioniert. Gemäß einer alternativen Ausführungsform können auch mehr oder weniger als sechs Polzähne 18 vorgesehen sein. Die Polzähne 18 dienen zum jeweiligen Aufnehmen eines Spulendrahts 19 zum Erzeugen einer Spule 20. Die Spulen 20 sind entsprechend über die Steuereinrichtung 11 mit der Energieversorgung 5 verbunden, um eine elektrische Spannung an die Spulen 20 anzulegen. Mit anderen Worten: die Spulen 20 werden bestromt. Mit Hilfe der Spulen 20 wird ein abwechselndes Magnetfeld erzeugt, durch welches der Rotor 12 gedreht wird.

Wie in den Figuren gezeigt enthält der Rotor 12 einen zylindrischen Rotorkörper 21 mit einer Anzahl an Permanentmagneten 22.

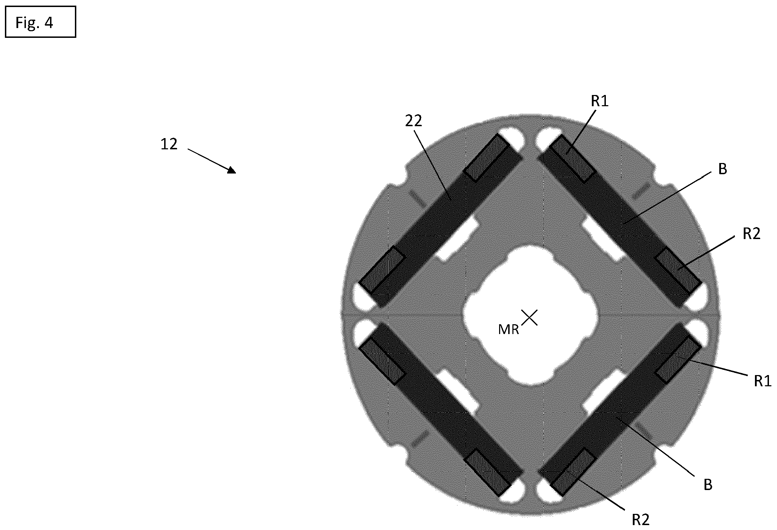

Der Rotorkörper 21 enthält eine Anzahl an Aussparungen 23, in die jeweils ein Permanentmagnet 22 eingeführt werden kann. Wie beispielsweise in Figur 2 und 4 angedeutet, sind die Permanentmagnete 22 hierdurch gleichmäßig um eine zentrale Rotationsachse R angeordnet. Die Rotationsachse R erstreckt sich dabei durch einen Mittelpunkt MR des Rotorkörpers 21. Jede Aussparung 23 weist dabei einen im Wesentlichen rechteckigen Hauptanteil, einen ersten und zweiten halbkreisförmigen Nebenanteil sowie einen unteren Anteil auf. Der Hauptanteil, die Nebenanteile und der untere Anteil dienen als Luftspalt, wenn sich ein Permanentmagnet 22 in der Aussparung 23 befindet.

In Figur 3 und 4 ist der Rotor 12 gemäß einer ersten Ausführungsform dargestellt, wobei der Rotorkörper 21 vier Aussparungen 23 aufweist. Es sind dabei jeweils zwei Aussparungen 23 gegenüberliegend und gleichmäßig um die Rotationsachse R positioniert. In jeder Aussparung 23 ist ein Permanentmagnet 22 angeordnet.

Figur 4 zeigt einen Rotorkörper mit vier Permanentmagneten 22 gemäß einer ersten Ausführungsform.

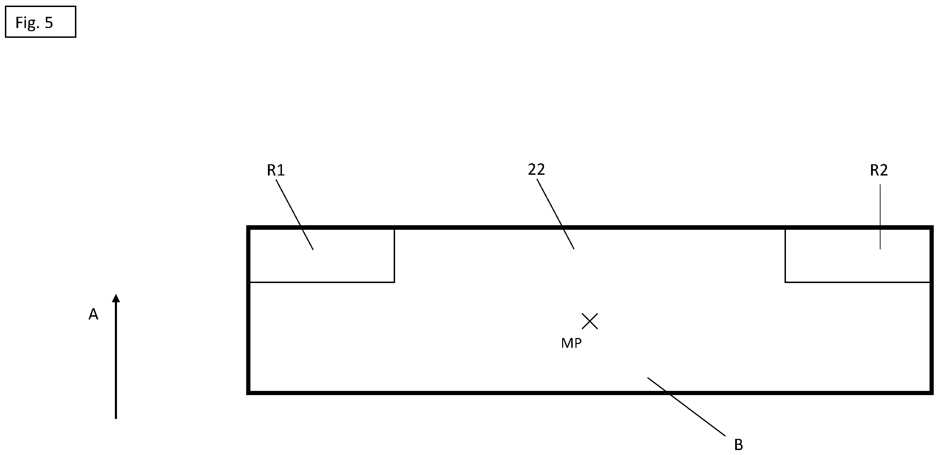

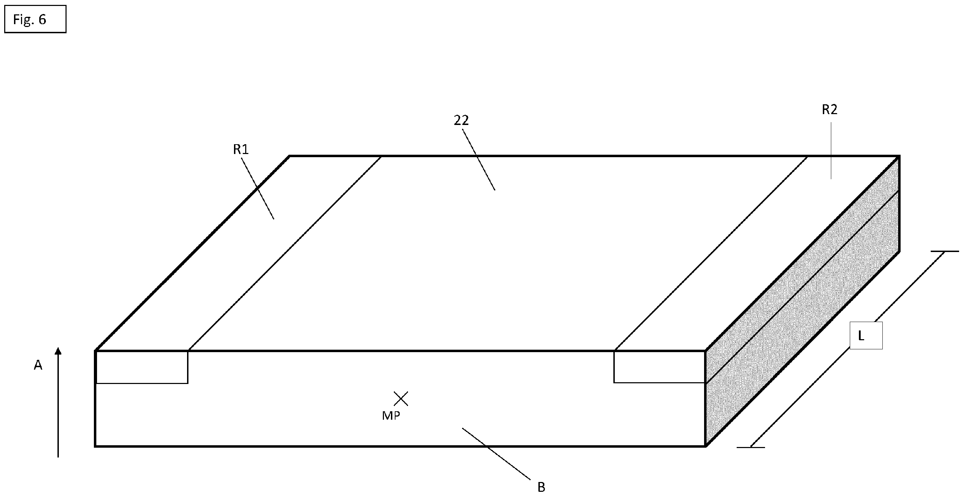

Ein Permanentmagnet 22 gemäß der ersten Ausführungsform weist eine im Wesentlichen rechteckige Querschnittsfläche auf, vgl. Figur 4 und 5. Wie in Figur 5 gezeigt weist das Material des Permanentmagnets 22 einen ersten und zweiten Randbereich R1, R2 auf, die sich jeweils in Pfeilrichtung A in der rechten bzw. linken Ecke befinden. Der erste und zweite Randbereich R1, R2 erstreckt sich über die gesamte Länge L des Permanentmagneten 22, vgl. Figur 6. Die Querschnittsfläche des ersten und zweiten Randbereichs R1, R2 ist rechteckig ausgestaltet.

Das Material bzw. der Werkstoff eines Permanentmagneten 22 bestehen aus NdFeB (Neodym-Eisen-Bor), aber weist keine Homogenität auf. Das Material in dem ersten und zweiten Randbereich R1, R2 weist eine um 5 bis 15%, vorzugsweise 7 bis 12%, höhere Koerzitivfeldstärke H_{CJ} auf als das Material jedes Permanentmagneten 22 in den verbleibenden Bereichen B außerhalb des ersten und zweiten Randbereichs R1, R2.

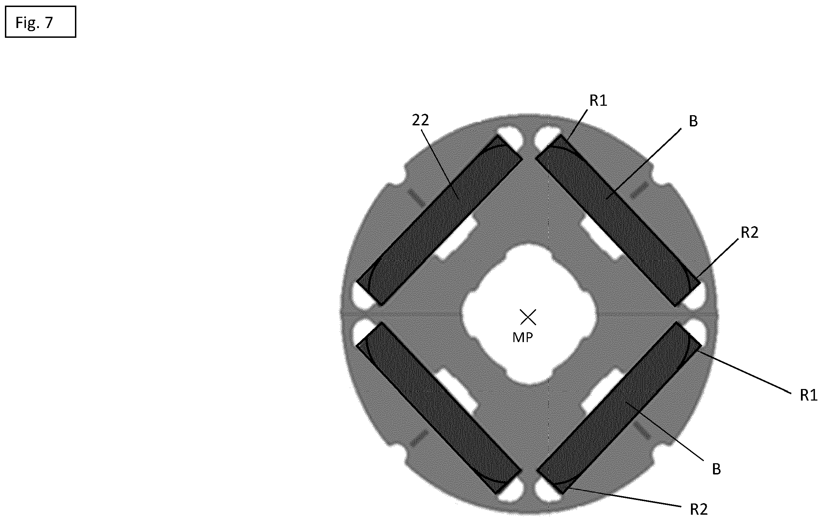

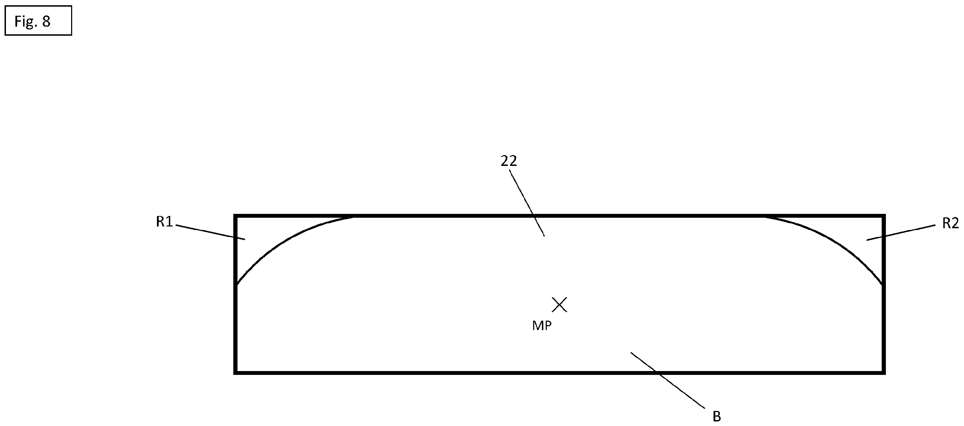

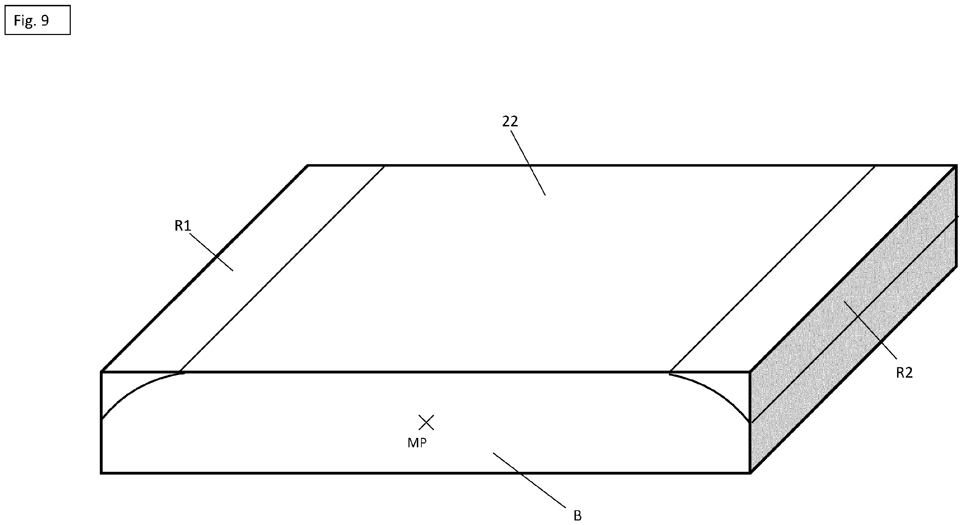

Figur 7 zeigt einen Rotorkörper 21 mit vier Permanentmagneten 22 gemäß einer zweiten Ausführungsform. Der Permanentmagnet 22 gemäß der zweiten Ausführungsform unterscheidet sich von dem Permanentmagnet 22 gemäß der ersten Ausführungsform dadurch, dass die Querschnittsfläche des ersten und zweiten Randbereichs R1, R2 in Form eines Dreiecks mit einer gebogenen Seite ausgestaltet ist, vgl. Figur 7, 8 und 9.

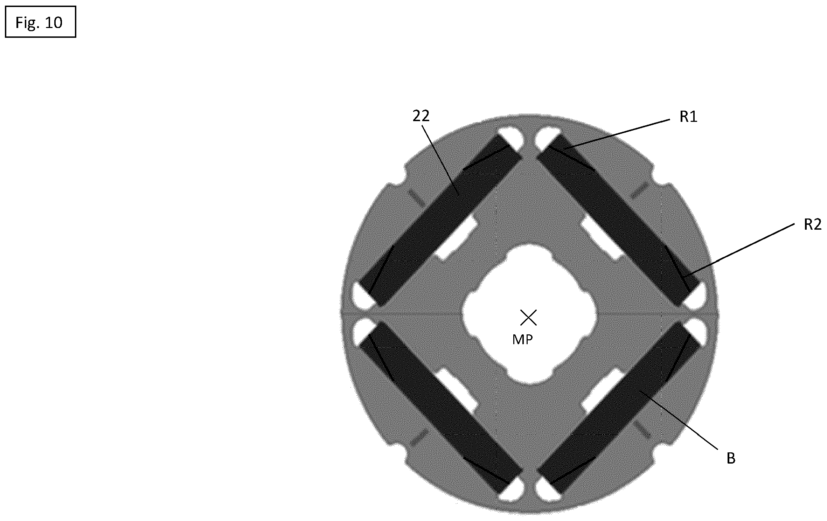

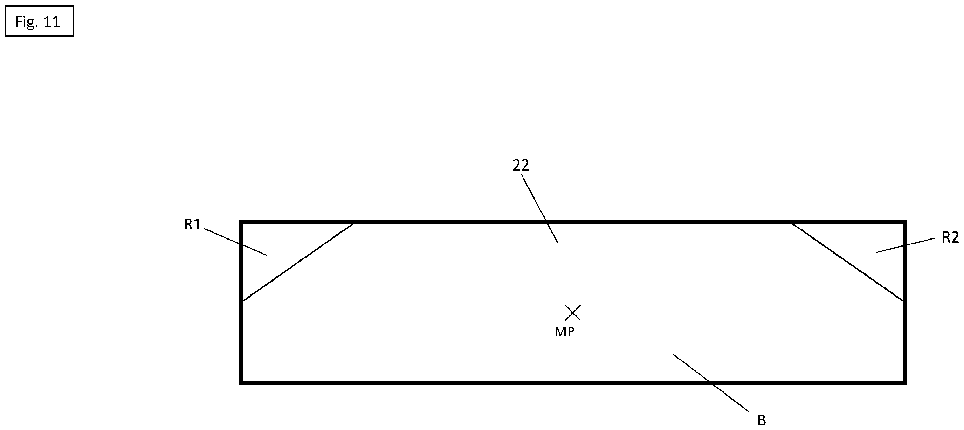

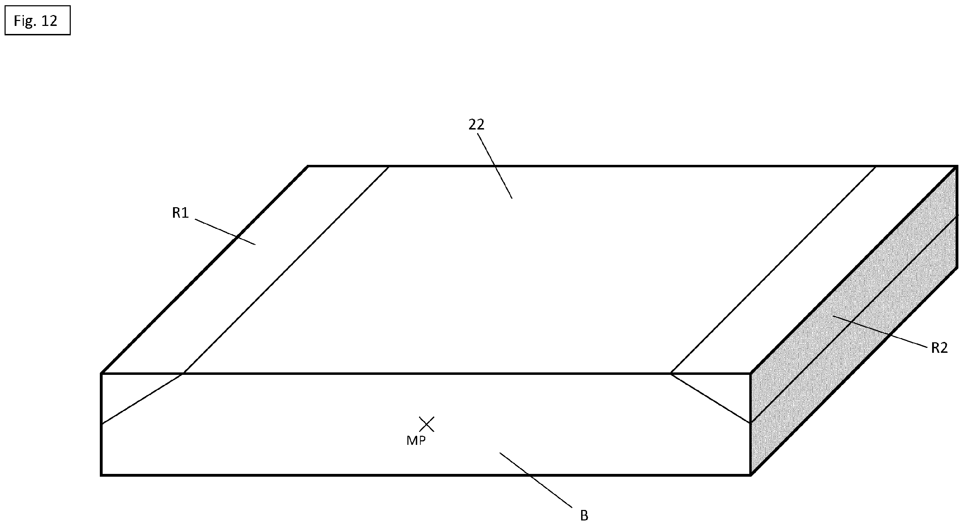

Figur 10 zeigt einen Rotorkörper 21 mit vier Permanentmagneten 22 gemäß einer dritten Ausführungsform. Der Permanentmagnet 22 gemäß der dritten Ausführungsform unterscheidet sich von dem Permanentmagnet 22 gemäß der ersten oder Ausführungsform dadurch, dass die Querschnittsfläche des ersten und zweiten Randbereichs R1, R2 in Form eines Dreiecks ausgestaltet ist, vgl. Figur 10, 11 und 12.

Darüber hinaus weist das Material jedes Permanentmagneten 22 in den Bereichen B außerhalb des ersten und zweiten Randbereichs R1, R2 eine um mindestens 5 bis 10%, vorzugsweise 7%, höhere Remanenzflussdichte auf als das Material jedes Permanentmagneten 22 in dem ersten und zweiten Randbereich R1, R2.

Des Weiteren beträgt das Volumen des ersten und zweiten Randbereichs R1, R2 zwischen 3 und 30%, vorzugsweise zwischen 5 und 25%, des Gesamtvolumens eines Permanentmagneten 22.

Die Entmagnetisierung der Permanentmagnete 22 kann durch Korngrenzen-Diffusionsprozess, der sogenannte GBD-Prozess, erreicht werden.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 4a: Werkzeug
- 5: Energieversorgung
- 6: Schnittstelle
- 8: Aktivierungsschalter
- 9: Elektromotor
- 10: Getriebevorrichtung
- 11: Antriebswelle
- 12: Rotor
- 13: Stator
- 14: Akku-Gehäuse
- 15: Energiespeicherzelle
- 16: Akku-Schnittstelle
- 17: Steuerungseinrichtung
- 18: Polzahn
- 19: Spulendraht
- 20: Spule
- 21: Rotorkörper
- 22: Permanentmagnet
- 23: Aussparung
- R: Rotationsachse
- R1: erster Randbereich
- R2: zweiter Randbereich
- B: Bereich außerhalb des ersten und zweiten Randbereichs
- MR: Mittelpunkt des Rotorkörpers
- MP: Mittelpunkt des Permanentmagneten

## Patentansprüche

1. Rotor (12) für einen Elektromotor (9), insbesondere als Antrieb für eine Werkzeugmaschine (1),
**gekennzeichnet durch** einen Rotorkörper (21) mit wenigstens einem ersten und zweiten um eine Rotationsachse (R) angeordneten Permanentmagnet (22), wobei das Material jedes Permanentmagneten (22) in einem ersten und zweiten Randbereich (R1, R2) eine um 5 bis 15%, vorzugsweise 7 bis 12%, höhere Koerzitivfeldstärke (H_{CJ}) aufweist als das Material jedes Permanentmagneten (22) in den verbleibenden Bereichen (B) außerhalb des ersten und zweiten Randbereichs (R1, R2).

2. Rotor (12) nach Anspruch 1,
**dadurch gekennzeichnet, dass** das Material jedes Permanentmagneten (22) in den Bereichen außerhalb des ersten und zweiten Randbereichs (R1, R2) eine um mindestens 5 bis 10%, vorzugsweise 7%, höhere Remanenzflussdichte aufweist als das Material jedes Permanentmagneten (22) in dem ersten und zweiten Randbereich (R1, R2).

3. Rotor (12) nach Anspruch 1 oder 2,
**dadurch gekennzeichnet, dass** das Volumen des ersten und zweiten Randbereichs (R1, R2) zwischen 3 und 30%, vorzugsweise zwischen 5 und 25%, des Gesamtvolumens eines Permanentmagneten (22) beträgt.

4. Rotor (12) nach wenigstens einem der Ansprüche 1 bis 3,
**dadurch gekennzeichnet, dass** sowohl der erste als auch zweite Randbereich (R1, R2) distal zu einem Mittelpunkt des Rotorkörpers (21) sowie zu einem Mittelpunkt (MP) eines Permanentmagnet (22) angeordnet sind.

5. Elektromotor (8) mit einem Rotor (12) nach wenigstens einem der Ansprüche 1 bis 4.

6. Werkzeugmaschine (1) mit einem Rotor (12) nach wenigstens einem der Ansprüche 1 bis 4.
